# EUROPEAN PATENT SPECIFICATION

(11) **EP 2 850 263 B1**
(45) Date of publication and mention of the grant of the patent: **11.05.2016**
(21) Application number: 13723216.1
(22) Date of filing: 22.03.2013
(51) Int. Cl.: E04H 1/12, E04H 5/04, H01L 31/04

(54) **INSTALLATION CABIN**
INSTALLATIONSKABINE
CABINE D'INSTALLATION

(30) Priority: 23.03.2012 IT MO20120075
(43) Date of publication of application: 25.03.2015
(73) Proprietor: Eurolam S.r.l., 41028 Modena (IT)
(72) Inventor: TORELLI, Palmo, I-41053 Pozza Di Maranello (MO) (IT); CIONI, Alessandro, I-41023 Montecenere Di Lama Mocogno (MO) (IT)
(74) Representative: Bergamini, Silvio
(86) International application number: PCT/IB2013/052291
(87) International publication number: WO 2013/140377

(56) References cited:
- AT-B- 293 692
- BE-A3- 1 012 646
- FR-A- 1 113 607
- FR-A1- 2 486 574
- FR-A1- 2 559 533

## Description

### Field of the invention

The invention relates to an installation cabin, which is generally intended for installation of parts of solar or photovoltaic cogeneration plants.

### Background art

Concrete cabins are known, which are designed for receiving parts of a plant mounted therein, such as a photovoltaic plant or a solar cogeneration plant, and are adapted to be placed in sites reached by terminals of power carrying lines from and to a public network.

Typically, these cabins are provided in the form of a one-piece product, which is composed of a load-bearing floor, peripheral walls and a covering roof.

An opening is formed in one of the peripheral walls, which is designed to receive a door for access to the interior.

Once these prior art cabins have been manufactured, they must be carried to the site in which they have to be placed, where a support base has been carried and installed on the soil beforehand.

This base has appropriate holes for the passage of cables connecting external equipment and internal parts of a photovoltaic or solar cogeneration plant, such parts being mounted in the cabin once it has been finally positioned.

Manholes are formed in the load-bearing floor, for accessing the underlying base, and through which the connection cables running in the soil and extending through the holes in the base, may be introduced into the interior of the cabin to connect with the parts of the plant.

Particularly, a photovoltaic plant is known to require a large number of wiring and connecting cables, many of which have a large diameter and a heavy weight, and are thus difficult to handle and bend for orientation toward and connection to the part of the system for which they are intended.

Once these cables have been introduced into the cabin through the manholes, they are laid on the load-bearing plane of the cabin, possibly protected in special cable ducts, to reach the points at which they are connected to the parts of the plant.

From patent AT 293692 a "Transformaturhaus" is known.

According to this patent, the "Transformaturhaus" comprises a base made of concrete from which three rings arise, again made with concrete, and forming a very high structure of the cabin that needs to arrive to the high of the cables which transport electric energy, so as to pass through it.

At the upper end of the upper ring a covering roof is arranged and among the rings, the base and the roof some braces are provided for and received in respective grooves, so as to maintain stable the whole structure of the cabin, by fixing it to the base.

Inside the cabin there is a floor resting on the base but the floor is totally deprived of openings passing through it.

In patent BE 1.012.646 an "High voltage box" is disclosed, suitable for to feed electricity and satisfying the IEC regulations.

The box consists of a prefab made of strengthened concrete defining a space for moving on one's hands and knees, a floor having openings, vertical walls and a roof.

Nevertheless, the openings in the floor are obtained only in specific zones thereby allowing communication between the inner space of the box and the zone under the floor only in such specific zones.

This prior art suffers from certain drawbacks.

A first drawback is that these cabins have considerable sizes and weights and their transport from the manufacturer to the installation site is often difficult.

Furthermore, special permits may be required for transit on the road.

A second drawback is that the some or all of the parts of a plant that are designed to be mounted in the cabins must be mounted after placement of the latter at the intended site.

Therefore, the operators are required to introduce and/or connect each part, and to operate in the cabins.

This considerably affects the comfort of operation and access to the parts, due to both the restricted space available to the operators and to the need to operate in a substantially closed space, which is strongly affected by weather, i.e. is very hot in Summer and very cold in Winter, doe to the low thermal insulation coefficient of concrete.

A third drawback is that the positions of the manholes for passage and access to the lower base must be set during fabrication of the cabin floors, which will restrict in an unchangeable manner the arrangement of the parts of a plant to be mounted therein without allowing any change to be made for any unpredicted adaptation.

A fourth drawback is that the large number of cables that connect the parts of the plant and the power carrying lines lie on the floor of the cabins or at the best are disposed in special cable ducts which in turn lie on the floor thereby cluttering it, and create obstacles to access and walking by operators for assembly and periodic maintenance.

### Disclosure of the invention

One object of the invention is to obviate the above mentioned drawbacks, by providing an installation cabin that has a light weight, is easily transportable and is composed of assemblable parts.

Another object of the invention is to provide an installation cabin that allows easy mounting therein of all the parts of a plant, e.g. a photovoltaic or solar cogeneration plant.

A further object of the invention is to provide an installation cabin that allows quick and simple wiring of all the connection cables required for operation of the plants mounted therein, while preventing such cables from cluttering the floor or walking surface.

Yet another object of the invention is to provide an installation cabin that does not require preset, unchangeable positions for the manholes or openings for access to and connection of the parts of a plant to respective power cords and power carrying cables.

In one aspect the invention relates to an installation cabin as defined in the features of claim 1.

The invention affords the following advantages:
- it may be pre-assembled at the factory and transported in an almost final assembled state to the destination site;
- it allows the parts of a plant to be mounted at the factory, before mounting the peripheral walls, i.e. in a simple and convenient manner, allowing access from every side, as it is entirely open;
- it is substantially lighter than prior art cabins, and hence it only presents difficulties in transport when cabins have a non-standard size;
- it allows the cables to conveniently reach the wiring points without running on the floor, as the latter is composed of modular grid elements, which can be possibly removed in a temporary or final manner as needed, without requiring special predetermined arrangement positions;
- it allows all the wiring cables to be contained in the support base resting on the soil, thereby clearing the walkway surface of the floor;
- it allows replacements of any part that has been damaged by outdoor exposure; and
- it allows the thermal insulation coefficient to be modulated as needed, unlike the unchangeable thermal insulation coefficient of concrete cabins.

### Brief description of the drawings

Further characteristics and advantages of the invention will be more apparent from the detailed description of a preferred, non-exclusive embodiment of an installation cabin which is shown as non-limiting example in the annexed drawings, in which:

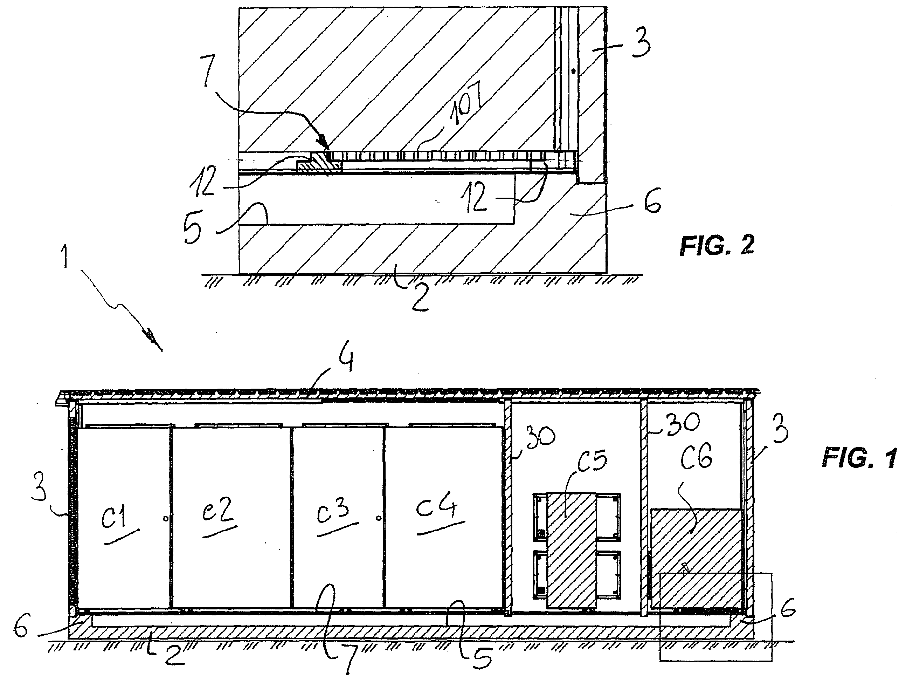

FIG. 1 is a longitudinal sectional view of an installation cabin of the invention;
FIG. 2 is an enlarged view of a detail of the installation cabin of the invention;
Figure 3 is a cross sectional view of the cabin of Figure 1;
FIG. 4 is an enlarged view of a detail of Figure 3;
FIG. 5 is a detailed sectional view of an alternative method of securing a base wall of the cabin of the invention;
FIG. 6 is a further detailed sectional view of a further alternative method of securing a base wall of the cabin of the invention.

### Detailed description of a preferred embodiment

Referring to the above mentioned figures, numeral 1 generally designates an installation cabin, which particularly adapted to receive therein parts C1, C2, C3, C4, C5, C6 of a plant, such as a photovoltaic plant.

As shown in the Figures, the cabin 1 comprises a concrete base 2, with side walls 3 and a covering roof 4 mounted thereto.

The base 2 has the shape of a tank with a bottom having a raised edge 6 that acts as a side board supporting both the side walls 3 and a floor 7, which will be better explained below.

Apertures 8 are formed in the base 2, for allowing the passage of cables from the exterior to the interior of the tank 2 and vice versa.

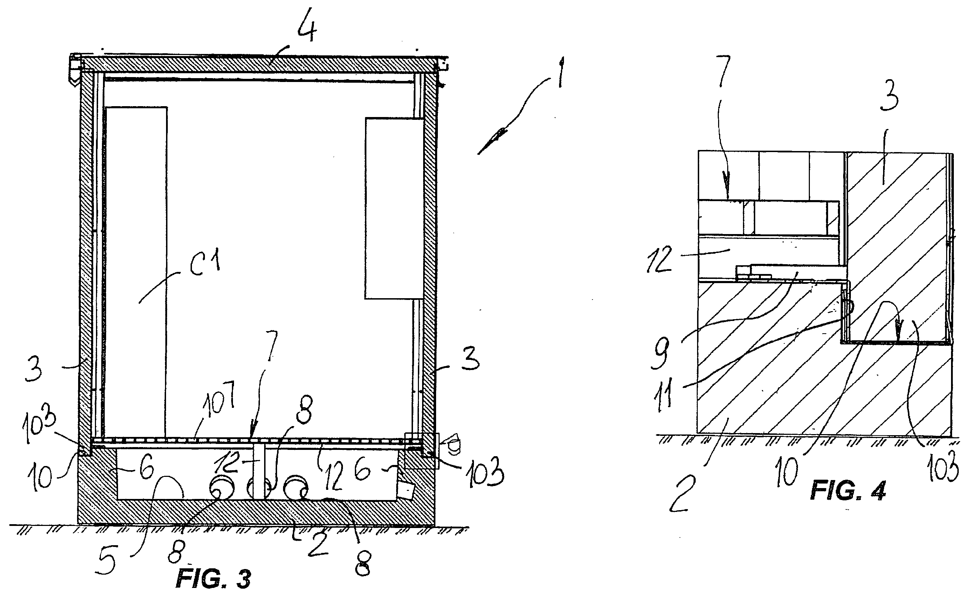

Referring to Figure 4, the side walls 3 are shown to have respective bottom ends 103, which are fixed to the raised edge 6 by means of brackets 9 and are received in a special concave notch 10 having a right-angle geometric profile, designed for mating connection to the profile of the section of the side walls 3.

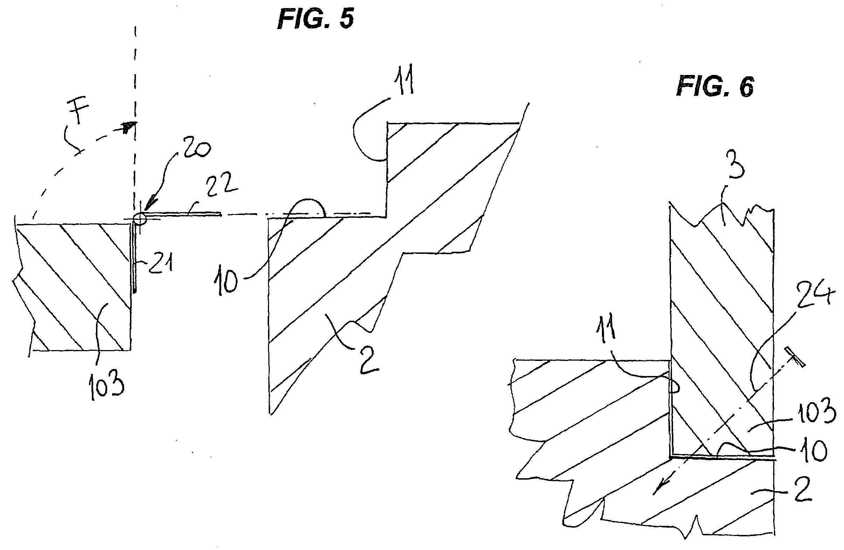

Figures 5 and 6 show two possible alternative embodiments of the fixation of the bottom ends 103 of the side walls 3 to the base 2.

More in detail, Figure 5 shows that hinge elements 20 can be interposed between the bottom ends 103 and the concave notch 10, which elements have wings 21 and 22, that are adapted to be fixed to the bottom ends 103 and the concave notch 10 and allow the walls to be mounted in a lying position and be later raised by rotation, as shown by arrow "F".

On the other hand, Figure 6 shows that the walls 3 are fixed to the base 2 by means of rivets or screws 24 which extend through the bottom ends 103, namely in an oblique direction, to be secured into the base 2.

The concave notch 10 is shaped in view of preventing infiltration of water and moisture from the soil upon which it is designed to rest, as well as the passage of grass, whereby it forms a step 11 all along its periphery, acting as a barrier, and against which the brackets 9 and the bottom ends 103 of the side walls 3 abut.

Referring back to Figure 4, the brackets 9 are shown to have a right-angled profile, with respective flat sections joined together and abutting against the corresponding surfaces that form the step 10, and secured thereto by known means, such as chemical anchors or expansion bolts, or other means known to the skilled person.

The floor 7 is composed of a plurality of grid elements 107 which are juxtaposed to form a seamless surface, and lie on a series of beams 12.

The beams 12 form a support framework that is raised to the bottom 5 and have respective ends lying on the raised edges 6.

Each grid element 107 actually consists of a quadrangular panel formed with a load-bearing net, typically made of metal, which is adapted to support walking by operators.

Wiring may be performed at each element C1-C6 by removing the panels 107 where the cables are designed to pass through the floor to be connected to the destination elements.

The operation of the installation cabin of the invention is as follows: the installation cabin 1 is typically assembled at a factory.

Thus, the base 2 is first formed, and the framework 12 is later laid thereon, for receiving the parts C1-C6 that form a plant to be mounted and held within the installation cabin 1.

Later, the gaps between the beams 12, whose height is slightly greater than the thickness of the panels 107, are closed by the latter, by sliding them below the parts C1-C6 thereby forming the floor 7.

The cables for wiring the parts C1-C6 are passed to the bottom 5 of the base 2 and accumulate thereon, such that they may be connected to their respective parts, without restricting the space for the movements of the operators.

Once cable arrangement and connection have been completed, the side walls 3 are mounted to the base 2, by fixing their bottom ends 103 to the brackets 9 or the hinge elements 20, which are designed for this purpose and are in turn fixed beforehand to the edges 6, by being coupled to the peripheral step 11.

Alternatively, the walls 3 are mounted to the base 2 and fixed thereto by the screws or rivets 24.

Finally, if required, inner partitions 30 are also mounted, and the roof 4 is laid on the walls 3 for closing the installation cabin 1, in which most of the parts C1-C6 of a plant, e.g. a photovoltaic plant, have been already mounted and wired.

At least one access door is provided on one of the side walls 3, allowing operator access.

Then, the installation cabin is loaded on a transport vehicle and carried to the installation site in which it will be placed.

After installation, the operators may pass the connecting cables from the exterior to the interior of the cabin through the apertures 8, namely to the interior of the base 2, and lay them on the bottom 5 below the floor 7, and quickly complete the last connections with the parts C1-C6 of the plant.

It shall be noted that, the cables may be passed from the bottom 5 of the base 2 to the destination parts C1-C6 by removing certain panels 107 (or part thereof) of all the panels that form the floor 7, i.e. those located where the cables are designed to pass through the floor 7 to reach their respective elements C1-C6, without requiring cable ducts lying on the floor 7.

The invention was found to fulfill the intended objects.

The invention so conceived is susceptible to a number of changes and variants within the inventive concept.

Furthermore, all the details may be replaced by other technically equivalent parts.

In practice, any materials, shapes and sizes may be used as needed, without departure from the scope of the following claims.

## Claims

1. An installation cabin (1) comprising:
- A support base (2) on a positioning surface, made of concrete and provided with passage openings (8) toward and from the outside;
- A container body made of peripheral walls (3) standing from said base (2) and a covering roof (4);
- An inner chamber wherein parts (C1, C2, C3, C4, C5, C6) of a plant can be housed, peripherally defined by said roof (4), peripheral walls (3) and base (2);
- A floor (7) arranged on said support base (2) and designed to hold said parts (C1, C2, C3, C4, C5, C6) according to installation schemes, said walls (3), roof (4) and floor (7) being removably assembled on said base (2) by assembling means (9, 12, 20) **characterized in that** said floor (7) is made in the form of a reticulated frame (12) of arranged side-by-side modular elements (107), each of said elements being shaped in the form of a quadrangular panel of planar and load-bearing net having selected width mashes.

2. An installation cabin as claimed in claim 1, wherein said support base (2) shapes a tank having a bottom (5) peripherally surrounded by edges (6) in relief.

3. An installation cabin as claimed in claim 1 or 2, wherein said floor comprises a banked floor (7) with respect of said bottom (5).

4. An installation cabin according to anyone of preceding claims, wherein said base (2) comprises openings (8) for connecting said bottom (5) to the outside.

5. An installation cabin according to anyone of preceding claims, wherein fixing means (9, 20) are provided for fixing said walls (3) on said base (2).

6. An installation cabin according to claim 2, wherein said edges (6) in relief shape in a transversal section a step-like shaped profile (10, 11), making a barrier between the outside and the bottom (5) of said base (2).

7. An installation method to install parts (C1, C2, C3, C4, C5, C6) of a plant inside an installation cabin (1), comprising the following steps:
- To prepare a concrete base (2) having a bottom (5);
- To superimpose to said base (2) a floor (7) ;
- To assemble said parts (C1, C2, C3, C4, C5, C6) on said floor (7);
- To arrange on said bottom (5) and under said floor (7) wiring cables of said parts (C1, C2, C3, C4, C5, C6);
- To place closing peripheral walls (3) on said edges (6) in relief after said to install, shaping an inner housing chamber; and
- To close the above of said inner housing chamber by a covering roof (4), **characterized in that** said floor is made by a reticular frame (12) of side-by-side arranged modular elements (107), each modular element being shaped in the form of a quadrangular panel (107) of a planar and load-bearing net having selected width mashes .

8. An installation method according to claim 7, wherein said to prepare, to superimpose, to assemble, to place, to close are carried out inside a factory.

9. An installation method according to claim 7, wherein said floor comprises a banked floor (7) with respect to said to said bottom (5).

10. An installation method according to claim 8, wherein said floor (7) comprises a plot of beams (12) resting on said tank and supporting said floor made of a plurality of grid elements (107).

## Patentansprüche

1. Eine Installationskabine (1) mit
- einem Haltesockel (2) auf einer Richtfläche aus Beton und mit Durchlass-Öffnungen (8) zu und von außen versehen,
- einem Containergehäuse aus äußeren Wänden (3), das auf dem Sockel (2) steht und einem abdeckenden Dach (4),
- einer inneren Kammer, in der Teile (C1, C2, C3, C4, C5, C6) einer Anlage aufgenommen werden können, die außen bestimmt ist durch das Dach (4), äußeren Wänden (3) und dem Sockel (2),
- einem Boden (7), der auf dem Haltesockel (2) angeordnet ist und ausgelegt zum Halten der Teile (C1, C2, C3, C4, C5, C6) nach Montageanleitungen, wobei die Wände (3), das Dach (4) und der Boden (7) lösbar zusammen gesetzt sind auf dem Haltesockel (2) mittels Montageeinrichtungen (9, 12, 20), **dadurch gekennzeichnet, dass** der Boden (7) in der Form eines netzartigen Rahmens (12) aus Seite an Seite angeodneten, modularen Elementen (107) ausgestaltet ist, wobei jedes dieser Elemente in der Form einer rechteckigen Platte eines ebenen und lasttragenden Netzes mit ausgewählten Maschenweiten geformt ist.

2. Eine Installationskabine gemäß Anspruch 1, **dadurch gekennzeichnet, dass** der Haltesockel (2) einen Tank bildet mit einer Basis (5), der am Umfang von ausgesparten Kanten (6) umgeben ist.

3. Eine Installationskabine gemäß Anspruch 1 oder 2, **dadurch gekennzeichnet, dass** der Boden einen überhöhten Boden (7) umfasst mit Bezug auf die Basis (5).

4. Eine Installationskabine gemäß einem der vorhergehenden Ansprüche, **dadurch gekennzeichnet, dass** der Sockel (2) Öffnungen (8) aufweist zum Verbinden der Basis (5) mit der Umgebung.

5. Eine Installationskabine gemäß einem der vorhergehenden Ansprüche, **dadurch gekennzeichnet, dass** Befestigungsein-richtungen (9, 20) vorgesehen sind zum Befestigen der Wände (3) auf dem Sockel (2).

6. Eine Installationskabine gemäß Anspruch 2, **dadurch gekennzeichnet, dass** die ausgesparten Kanten (6) in einem transversalen Abschnitt ein stufenartiges Profil (10, 11) bilden, das eine Sperre zwischen der Umgebung und der Basis (5) des Sockels (2) formt.

7. Ein Installationsverfahren zur Installation von Teilen (C1, C2, C3, C4, C5, C6) einer Anlage in einer Installationskabine (1) mit den folgenden Schritten:
- Vorbereiten eines Sockels (2) aus Beton mit einer Basis (5),
- Überlagern eines Bodens (7) auf den Sockel (2),
- Zusammen setzen der Teile (C1, C2, C3, C4, C5, C6) auf dem Boden (7),
- Anordnen auf der Basis (5) und unter dem Boden (7) von Drähten der Teile (C1, C2, C3, C4, C5, C6),
- Setzen von abschließenden äußeren Wänden (3) auf den ausgesparten Kanten (6) nach dem zu installieren zum Formen einer inneren Aufnahmekammer und
- Schließen des Oberen der inneren Aufnahmekammer mit einem abdeckenden Dach (4), **dadurch gekennzeichnet, dass** der Boden hergestellt ist aus einem netzartigen Rahmen (12) aus Seite an Seite angeodneten, modularen Elementen (107) ausgestaltet ist, wobei jedes dieser Elemente in der Form einer rechteckigen Platte (107) eines ebenen und lasttragenden Netzes mit ausgewählten Maschenweiten geformt ist.

8. Ein Verfahren zur Installation gemäß Anspruch 7, **dadurch gekennzeichnet, dass** das Vorbereiten, Überlagern, Zusammen setzen, Anordnen, Schließen in einer Fabrik ausgeführt wird.

9. Ein Verfahren zur Installation gemäß Anspruch 7, **dadurch gekennzeichnet, dass** der Boden einen überhöhten Boden (7) umfasst mit Bezug auf die Basis (5)

10. Ein Verfahren zur Installation gemäß Anspruch 8, **dadurch gekennzeichnet, dass** der Boden (7) einen Satz von Balken (12) umfasst, die auf dem Tank abgestützt sind und den aus einer Vielzahl von Netzelementen (107) gefertigten Boden tragen.

## Revendications

1. Cabine d'installation (1) comprenant :
- une base de support (2) reposant sur une surface de positionnement constituée en béton et dotée d'ouvertures (8) de passage depuis et vers l'extérieur ;
- un corps de conteneur constitué de parois périphériques (3) s'élevant depuis ladite base (2) et d'une toiture (4) ;
- une chambre interne destinée à loger des parties (C1, C2, C3, C4, C5, C6) d'un équipement, dont la périphérie est définie par ladite toiture (4), lesdites parois périphériques (3) et ladite base (2) ;
un plancher (7) disposé sur ladite base de support (2) et destiné à retenir lesdites parties (C1, C2, C3, C4, C5, C6) selon des configurations d'installation lesdites parois (3), ladite toiture (4) et ledit plancher (7) étant assemblés amovibles sur ladite base (2) à l'aide de moyens d'assemblage (9, 12, 20), **caractérisée en ce que** ledit plancher (7) est réalisé en forme de cadre réticulaire (12) d'éléments modulaires (107) adjacents, chacun desdits éléments étant façonné en forme de panneau quadrangulaire de grillage plat et porteur ayant des mailles de largeur sélectionnée.

2. Cabine d'installation selon la revendication 1, dans laquelle ladite base de support (2) définit un réservoir comportant un fond (5) entouré à sa périphérie par des bords (6) en relief.

3. Cabine d'installation selon la revendication 1 ou 2, dans laquelle ledit plancher comprend un plancher surélevé (7) par rapport audit fond (5).

4. Cabine d'installation selon n'importe laquelle des revendications précédentes, dans laquelle ladite base (2) comprend des ouvertures (8) pour relier ledit fond (5) à l'extérieur.

5. Cabine d'installation selon n'importe laquelle des revendications précédentes, dans laquelle des moyens de fixation (9, 20) sont prévus pour fixer lesdites parois (3) sur ladite base (2).

6. Cabine d'installation selon la revendication 2, dans laquelle lesdits bords (6) en relief définissent en coupe un profil en forme de marche (10,11),formant une barrière entre l'extérieur et le fond (5) de ladite base (2).

7. Procédé d'installation pour installer des parties (C1, C2, C3, C4, C5, C6) d'un équipement à l'intérieur d'une cabine d'installation (1), comprenant les étapes suivantes :
- préparer une base en béton (2) comportant un fond (5) ;
- superposer un plancher (7) sur ladite base (2) ;
- assembler lesdites parties (C1, C2, C3, C4, C5, C6) sur ledit plancher (7) ;
- agencer des lignes de câblage desdites parties (C1, C2, C3, C4, C5, C6) sur ledit fond (5) et sous ledit plancher (7) ;
- disposer des parois périphériques de fermeture (3) sur lesdits bords (6) en relief après ladite étape d'installer, définissant ainsi une chambre interne de logement ; et
- fermer ladite chambre interne de logement à son sommet par une toiture (4), **caractérisé en ce que** ledit plancher est réalisé en forme de cadre réticulaire (12) d'éléments modulaires (107) adjacents, chaque élément modulaire étant façonné en forme de panneau quadrangulaire (107) de grillage plat et porteur ayant des mailles de largeur sélectionnée.

8. Procédé d'installation selon la revendication 7, dans lequel lesdites étapes de préparer, superposer, assembler, disposer, fermer sont effectuées à l'intérieur d'une usine.

9. Procédé d'installation selon la revendication 7, dans laquelle ledit plancher comprend un plancher surélevé (7) par rapport audit fond (5).

10. Procédé d'installation selon la revendication 8, dans lequel ledit plancher (7) comprend une charpente de poutres (12) reposant sur ledit réservoir et soutenant ledit plancher constitué d'une pluralité d'éléments de grillage (107).
